# EUROPEAN PATENT APPLICATION

(11) **EP 2 679 868 A1**
(43) Date of publication of application: **01.01.2014**
(21) Application number: 11859060.3
(22) Date of filing: 14.12.2011
(51) Int. Cl.: F16H 61/00, F16H 59/42, F16H 61/12, F16H 61/662

(54) **BELT-TYPE CONTINUOUSLY VARIABLE TRANSMISSION AND VEHICLE WITH SAME**

(30) Priority: 24.02.2011 JP 2011038479
(71) Applicant: Yamaha Hatsudoki Kabushiki Kaisha, Iwata-shi, Shizuoka 438-8501 (JP)
(72) Inventor: MANO Yasunori, Iwata-shi Shizuoka 438-8501 (JP)
(74) Representative: Grünecker, Kinkeldey, Stockmair & Schwanhäusser
(86) International application number: PCT/JP2011/078891
(87) International publication number: WO 2012/114612

(57) **Abstract**

A hydraulic circuit 25 includes a first control valve 53 that controls a hydraulic pressure of a first oil chamber 41 of a CVT 30; a lubrication circuit 80 whose hydraulic pressure changes in accordance with an engine rotational speed so that the higher the engine rotational speed, the higher the hydraulic pressure; and a fail-safe valve 54 including an electromagnetic four-way valve. During normal operation, the fail-safe valve 54 is set to a first state in which the first control valve 53 and the first oil chamber 41 communicate with each other. At a time of failure, the fail-safe valve 54 is switched to a second state in which at least the first oil chamber 41 and the lubrication circuit 80 communicate with each other.

## Description

### TECHNICAL FIELD

The present invention relates to belt type continuously variable transmissions and vehicles including the same.
Note that the present application claims priority based on Japanese Patent Application No. 2011-38479 filed on February 24, 2011, the entire contents of which are hereby incorporated by reference.

### BACKGROUND ART

A hydraulically-controlled belt type continuously variable transmission (hereinafter referred to as a "CVT") is conventionally known. A hydraulically-controlled CVT includes a driving pulley, a driven pulley, and a V-belt wound around both of the pulleys. Each pulley is provided with an oil chamber to which oil is supplied. The oil chamber is connected to a hydraulic circuit. The hydraulic circuit is provided with a control valve that controls a hydraulic pressure of the oil chamber. A controller controls the control valve, thus controlling the hydraulic pressure of the oil chamber. As a result, a transmission ratio of the CVT is controlled.

Upon occurrence of failure in the controller, for example, the transmission ratio of the CVT cannot be controlled. However, even at the time of failure, a vehicle is required to be able to travel a certain distance, i.e., to "limp-home", so that the vehicle can reach a repair shop, for example, under its own power. When a speed change cannot be performed while a reduction ratio remains small, it is difficult for the vehicle to start. Therefore, in order to ensure that the vehicle can "limp-home", various techniques are conventionally proposed to keep the reduction ratio of the CVT at a reduction ratio which enables the vehicle to start at the time of failure.

Patent Literature 1 discloses that oil is trapped in an oil chamber of a driving pulley at the time of failure. The oil trapped in the oil chamber slowly leaks from a seal portion. Thus, a reduction ratio is gradually increased and is then kept in "LOW", i.e., at a maximum reduction ratio. Patent Literature 2 discloses that oil in an oil chamber is discharged at the time of failure, and that an orifice is provided in a circuit through which oil is discharged. The oil in the oil chamber is slowly discharged via the orifice, and therefore, a reduction ratio is gradually increased and is then kept in "LOW".

Patent Literature 3 discloses a technique for allowing an oil chamber of a driving pulley to communicate with a high-pressure portion of a hydraulic circuit when a hydraulic pressure control valve is inoperative while an output port of the hydraulic pressure control valve remains in communication with a drain port. Thus, it is believed that a hydraulic pressure of the oil chamber is kept relatively high, and a reduction ratio is kept at a given value. Patent Literature 4 discloses a pressure regulating valve that keeps a hydraulic pressure of an oil chamber of a driving pulley at a given pressure at the time of failure. Thus, the hydraulic pressure of the oil chamber is kept at a constant pressure, and a reduction ratio is kept at a given value.

### CITATION LIST

### PATENT LITERATURE

- [Patent Literature 1]: JP-A-8-178049
- [Patent Literature 2]: JP-A-2001-280455
- [Patent Literature 3]: JP-A-2006-316819
- [Patent Literature 4]: JP-A-2004-169895

### SUMMARY OF INVENTION

### TECHNICAL PROBLEM

With the techniques disclosed in Patent Literatures 1 and 2, a vehicle is allowed to start successfully by keeping the reduction ratio in "LOW" at the time of failure. However, even during traveling after the start, the reduction ratio is still in "LOW", which disadvantageously makes it impossible to ensure smooth traveling.

With the techniques disclosed in Patent Literatures 3 and 4, the reduction ratio is kept at the given value instead of being kept in "LOW", and therefore, favorable traveling is enabled compared with a case where the reduction ratio is in "LOW". However, since the reduction ratio is set at a constant value, favorable traveling can be expected but it is difficult to make a smooth start when the reduction ratio is set at a small ratio. Conversely, when the reduction ratio is set at a large ratio, a smooth start can be expected but it is difficult to carry out smooth traveling.

The present invention has been made in view of the above-described problems, and its object is to provide a belt type continuously variable transmission capable of allowing a vehicle to start and travel smoothly and allowing the vehicle to "limp-home" more easily and reliably at the time of failure.

### SOLUTION TO PROBLEM

A belt type continuously variable transmission according to a preferred embodiment of the present invention is a belt type continuously variable transmission to be installed on a vehicle including an engine. The belt type continuously variable transmission includes a first pulley which includes a pair of first sheaves and a first oil chamber that contains oil and in which a distance between the pair of first sheaves is adjusted by a hydraulic pressure of the first oil chamber so that the distance between the pair of first sheaves is reduced as the hydraulic pressure of the first oil chamber increases, a second pulley including a pair of second sheaves, a belt wound between the pair of first sheaves and between the pair of second sheaves, and a hydraulic circuit connected to the first oil chamber. The hydraulic circuit includes a control valve that controls the hydraulic pressure of the first oil chamber, a pressure change circuit whose hydraulic pressure changes in accordance with a rotational speed of the engine so that the higher the rotational speed of the engine, the higher the hydraulic pressure in the pressure change circuit, and a switching valve that can be switched between a first state in which the control valve and the first oil chamber communicate with each other and a second state in which at least the first oil chamber and the pressure change circuit communicate with each other.

### ADVANTAGEOUS EFFECTS OF INVENTION

The present invention can provide a belt type continuously variable transmission capable of allowing a vehicle to start and travel smoothly and allowing the vehicle to "limp-home" more easily and reliably at the time of failure.

### BRIEF DESCRIPTION OF THE DRAWINGS

FIG. 1 is a side view of a motorcycle.
FIG. 2 is a circuit diagram of a hydraulic circuit according to a first preferred embodiment of the present invention during normal operation.
FIG. 3 is a circuit diagram of the hydraulic circuit according to the first preferred embodiment of the present invention at the time of failure.
FIG. 4(a) is a time chart showing hydraulic pressures at the time of failure.
FIG. 4(b) is a time chart showing reduction ratios at the time of failure.
FIG. 4(c) is a time chart showing vehicle speeds at the time of failure.
FIG. 5(a) is a time chart showing hydraulic pressures at the time of restart.
FIG. 5(b) is a time chart showing reduction ratios at the time of restart.
FIG. 5(c) is a time chart for vehicle speeds at the time of restart.
FIG. 6 is a circuit diagram of a hydraulic circuit according to a second preferred embodiment of the present invention at the time of failure.
FIG. 7 is a circuit diagram of a hydraulic circuit according to a third preferred embodiment of the present invention during normal operation.
FIG. 8 (a) is a diagram including reference signs indicating a fail-safe valve according to the third preferred embodiment of the present invention during normal operation.
FIG. 8(b) is a schematic diagram of the fail-safe valve of FIG. 8(a).
FIG. 9(a) is a diagram including the reference signs indicating the fail-safe valve according to the third preferred embodiment of the present invention at the time of failure and when a pressure of a pressure change circuit is low.
FIG. 9(b) is a schematic diagram of the fail-safe valve of FIG. 9(a).
FIG. 10(a) is a diagram including the reference signs indicating the fail-safe valve according to the third preferred embodiment of the present invention at the time of failure and when the pressure of the pressure change circuit is high.
FIG. 10(b) is a schematic diagram of the fail-safe valve of FIG. 10(a).

### DETAILED DESCRIPTION OF THE PREFERRED EMBODIMENTS

### First Preferred Embodiment

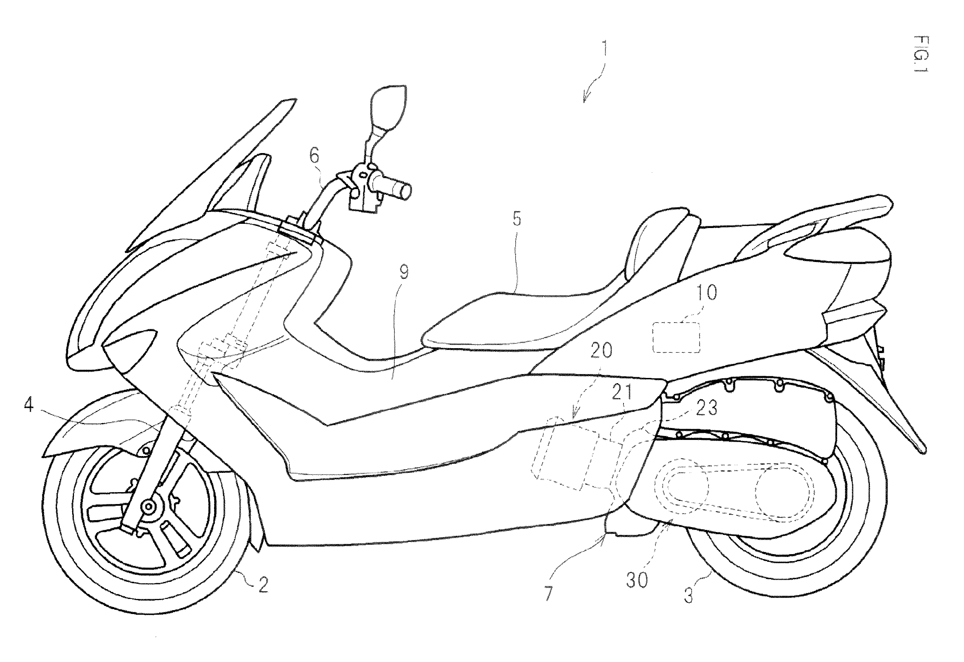

As illustrated in FIG. 1, a belt type continuously variable transmission (CVT) 30 according to the present preferred embodiment is provided in a driving unit 7 of a motorcycle 1. The motorcycle 1 is provided as an example of a vehicle on which the belt type continuously variable transmission according to a preferred embodiment of the present invention is to be installed, and preferably is a scooter type motorcycle in the present preferred embodiment. However, a vehicle on which the belt type continuously variable transmission according to a preferred embodiment of the present invention is to be installed is not limited to a motorcycle.

As illustrated in FIG. 1, the motorcycle 1 includes a vehicle main body 9, a front wheel 2, and a rear wheel 3 serving as a driving wheel. The vehicle main body 9 is provided with a seat 5 on which a rider sits. The front wheel 2 is supported by a lower end portion of a front fork 4. A handlebar 6 is attached to an upper end portion of the front fork 4.

The driving unit 7 provides a driving force to the rear wheel 3. The driving unit 7 includes an engine 20 and the CVT 30. The engine 20 includes a cylinder 21 in which a not-illustrated piston is slidably contained, a crankshaft connected to the piston via a not-illustrated connecting rod, and a crankcase 23 in which the crankshaft is contained. The CVT 30 is preferably disposed laterally of the crankcase 23.

The motorcycle 1 includes a controller 10 that is arranged and programmed to control the engine 20 and the CVT 30, for example. An ECU (Electronic Control Unit), for example, may be used as the controller 10. The controller 10 is preferably disposed above the driving unit 7. However, a position where the controller 10 is disposed is not limited to any particular position.

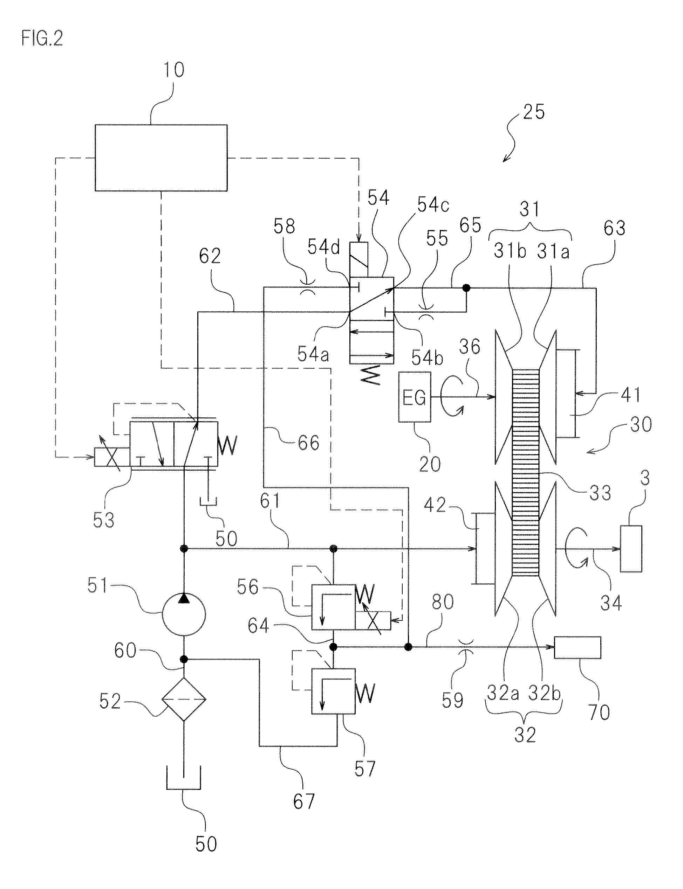

The CVT 30 is preferably a hydraulically-controlled continuously variable transmission. As illustrated in FIG. 2, the CVT 30 includes a hydraulic circuit 25.

The CVT 30 includes a primary pulley 31 serving as a first pulley, a secondary pulley 32 serving as a second pulley, and a belt 33 wound around the primary pulley 31 and the secondary pulley 32. The primary pulley 31 includes a fixed sheave 31b and a movable sheave 31a movable in an axial direction (i.e., rightward and leftward in FIG. 2) with respect to the fixed sheave 31b. The movable sheave 31a and the fixed sheave 31b are connected to a primary shaft 36. The movable sheave 31a and the fixed sheave 31b rotate together with the primary shaft 36. The primary shaft 36 is directly or indirectly connected to the crankshaft (not illustrated) of the engine 20. The primary shaft 36 rotates by receiving a torque of the crankshaft. Note that a portion of the crankshaft may constitute the primary shaft 36.

The secondary pulley 32 includes a fixed sheave 32b and a movable sheave 32a movable in the axial direction (i.e., rightward and leftward in FIG. 2) with respect to the fixed sheave 32b. The movable sheave 32a and the fixed sheave 32b are connected to a secondary shaft 34. The secondary shaft 34 rotates together with the movable sheave 32a and the fixed sheave 32b. The secondary shaft 34 is directly or indirectly connected to the rear wheel 3. The rear wheel 3 rotates by receiving a torque of the secondary shaft 34.

In the present preferred embodiment, the belt 33 is preferably a metal belt. However, the belt 33 is not limited to a metal belt, but may be selected from other types of belts such as a resin belt. The belt 33 is located between the movable sheave 31a and the fixed sheave 31b of the primary pulley 31, and between the movable sheave 32a and the fixed sheave 32b of the secondary pulley 32.

A distance between the movable sheave 31a and the fixed sheave 31b and a distance between the movable sheave 32a and the fixed sheave 32b are each changed, thus changing a reduction ratio of the CVT 30. When the movable sheave 31a is located closest to the fixed sheave 31b and the movable sheave 32a is located farthest from the fixed sheave 32b, the reduction ratio is in "OVERDRIVE" (i.e., at a minimum reduction ratio), which will hereinafter be referred to as "OD". Conversely, when the movable sheave 31a is located farthest from the fixed sheave 31b and the movable sheave 32a is located closest to the fixed sheave 32b, the reduction ratio is in "LOW" (i.e., at a maximum reduction ratio). The reduction ratio can be freely adjusted between "OD" and "LOW".

The reduction ratio is controlled by utilizing a hydraulic pressure. The primary pulley 31 is provided with a first oil chamber 41. Oil is supplied from the hydraulic circuit 25 to the first oil chamber 41 as appropriate, and is discharged from the first oil chamber 41 to the hydraulic circuit 25 as appropriate. The movable sheave 31a is arranged so as to be axially moved in accordance with a hydraulic pressure of the first oil chamber 41. The movable sheave 31a comes close to the fixed sheave 31b upon an increase in hydraulic pressure of the first oil chamber 41, and the movable sheave 31a moves away from the fixed sheave 31b upon a reduction in hydraulic pressure of the first oil chamber 41. The reduction ratio decreases upon an increase in hydraulic pressure of the first oil chamber 41, and the reduction ratio increases upon a reduction in hydraulic pressure of the first oil chamber 41.

The secondary pulley 32 is provided with a second oil chamber 42. Oil is supplied from the hydraulic circuit 25 to the second oil chamber 42 as appropriate, and is discharged from the second oil chamber 42 to the hydraulic circuit 25 as appropriate. The movable sheave 32a is arranged so as to be axially moved in accordance with a hydraulic pressure of the second oil chamber 42. The movable sheave 32a comes close to the fixed sheave 32b upon an increase in hydraulic pressure of the second oil chamber 42, and the movable sheave 32a moves away from the fixed sheave 32b upon a reduction in hydraulic pressure of the second oil chamber 42. The reduction ratio increases upon an increase in hydraulic pressure of the second oil chamber 42, and the reduction ratio decreases upon a reduction in hydraulic pressure of the second oil chamber 42.

Note that the first oil chamber 41 may be provided integrally with the movable sheave 31a, or may be provided separately from the movable sheave 31a. For example, the first oil chamber 41 may be provided inside a hydraulic actuator provided separately from the movable sheave 31a. Similarly, the second oil chamber 42 may be provided integrally with the movable sheave 32a, or may be provided separately from the movable sheave 32a. For example, the second oil chamber 42 may be provided inside a hydraulic actuator provided separately from the movable sheave 32a.

Next, a configuration of the hydraulic circuit 25 will be described. The hydraulic circuit 25 includes a tank 50 in which oil is stored, an oil pump 51, a first control valve 53 serving as an example of a control valve that controls the hydraulic pressure of the first oil chamber 41, a second control valve 56 serving as an example of a pressure reducing mechanism that controls the hydraulic pressure of the second oil chamber 42, and a fail-safe valve 54 serving as an example of a switching valve.

The oil pump 51 is indirectly connected to the crankshaft of the engine 20 so as to be operated in conjunction with the engine 20. The higher the engine rotational speed, the higher the rotational speed of the oil pump 51, and the lower the engine rotational speed, the lower the rotational speed of the oil pump 51. Note that the engine rotational speed refers to the rotational speed of the crankshaft. A flow rate of oil discharged from the oil pump 51 is increased as the engine rotational speed is increased, and the flow rate of oil discharged from the oil pump 51 is reduced as the engine rotational speed is reduced.

A suction circuit 60 through which the tank 50 and a suction-side portion of the oil pump 51 are connected to each other is provided with a strainer 52. A discharge-side portion of the oil pump 51 and the second oil chamber 42 communicate with each other via a first circuit 61.

The fail-safe valve 54 preferably includes an electromagnetic four-way valve, and includes a first port 54a, a second port 54b, a third port 54c and a fourth port 54d. The first circuit 61 and the first port 54a of the fail-safe valve 54 communicate with each other through a second circuit 62. The first control valve 53 is provided in the second circuit 62. The first control valve 53 is preferably an electromagnetic pressure control valve that adjusts a downstream pressure. The first control valve 53 receives a control signal from the controller 10 to control the hydraulic pressure of the first oil chamber 41 within a pressure range between given minimum and maximum pressures. When the first control valve 53 receives no control signal from the controller 10, i.e., when the first control valve 53 is not energized, a set pressure of the first control valve 53 is the maximum pressure.

The second port 54b of the fail-safe valve 54 and the first oil chamber 41 communicate with each other through a third circuit 63. The third circuit 63 is provided with an orifice 55.

The hydraulic circuit 25 includes a lubrication circuit 80 serving as an example of a pressure change circuit that is opened toward a sliding portion 70 of the engine 20 or the CVT 30. The lubrication circuit 80 is a circuit through which oil is supplied to the sliding portion 70. The sliding portion 70 is lubricated with oil supplied from the lubrication circuit 80. The lubrication circuit 80 is provided with an orifice 59.

The first circuit 61 and the lubrication circuit 80 communicate with each other through a fourth circuit 64. The second control valve 56 is provided in the fourth circuit 64. The second control valve 56 is preferably an electromagnetic pressure control valve that adjusts an upstream pressure. The second control valve 56 receives a control signal from the controller 10 to control the hydraulic pressure of the second oil chamber 42 within a pressure range between given minimum and maximum pressures. When the second control valve 56 receives no control signal from the controller 10, i.e., when the second control valve 56 is not energized, a set pressure of the second control valve 56 is the maximum pressure.

A portion of the third circuit 63 located closer to the first oil chamber 41 than the orifice 55 and the third port 54c of the fail-safe valve 54 communicate with each other through a fifth circuit 65. The fourth port 54d of the fail-safe valve 54 and a portion of the lubrication circuit 80 located upstream of the orifice 59 communicate with each other through a sixth circuit 66. The sixth circuit 66 is provided with an orifice 58.

The portion of the lubrication circuit 80 located upstream of the orifice 59 and a portion of the suction circuit 60 located downstream of the strainer 52 communicate with each other through a seventh circuit 67. The seventh circuit 67 is provided with a relief valve 57. When a hydraulic pressure of the lubrication circuit 80 exceeds an upper limit, the relief valve 57 allows some of the oil in the lubrication circuit 80 to flow out to the suction circuit 60 so that the hydraulic pressure of the lubrication circuit 80 falls below the upper limit. The relief valve 57 is arranged so as to be opened when the upstream hydraulic pressure reaches the upper limit, which is set in advance.

When the fail-safe valve 54 receives a control signal from the controller 10, i.e., when the fail-safe valve 54 is energized, the fail-safe valve 54 enters a state (first state) in which the first port 54a and the third port 54c communicate with each other and the second port 54b and the fourth port 54d do not communicate with each other. Conversely, when the fail-safe valve 54 receives no control signal from the controller 10, i.e., when the fail-safe valve 54 is not energized, the fail-safe valve 54 enters a state (second state) in which the first port 54a and the second port 54b communicate with each other and the third port 54c and the fourth port 54d communicate with each other.

During normal operation, the control signal is supplied from the controller 10 to the first control valve 53, the second control valve 56 and the fail-safe valve 54. As illustrated in FIG. 2, the fail-safe valve 54 enters the state in which the first port 54a and the third port 54c communicate with each other and the second port 54b and the fourth port 54d do not communicate with each other. The first control valve 53 and the second control valve 56 control the hydraulic pressures of the first oil chamber 41 and the second oil chamber 42, respectively, thus controlling the reduction ratio of the CVT 30 to a given value. The controller 10 controls the reduction ratio of the CVT 30 in accordance with an operating state of the motorcycle 1.

A portion of the oil discharged from the oil pump 51 passes through the first control valve 53 to become oil having a given pressure. This oil passes through the first port 54a and the third port 54c of the fail-safe valve 54, and is supplied to the first oil chamber 41. Therefore, the hydraulic pressure of the first oil chamber 41 is controlled to be a given pressure. The other portion of the oil discharged from the oil pump 51 is supplied to the second oil chamber 42 through the first circuit 61. The hydraulic pressure of the first circuit 61 is controlled to be a given pressure by the second control valve 56. Hence, the hydraulic pressure of the second oil chamber 42 is controlled to be a given pressure. Oil discharged from the second control valve 56 is supplied to the lubrication circuit 80, and is then supplied as lubricating oil to the sliding portion 70. The oil utilized as lubricating oil is collected into the tank 50. When the hydraulic pressure of the lubrication circuit 80 is higher than the upper limit, the relief valve 57 is opened, and a portion of the oil in the lubrication circuit 80 is sucked into the oil pump 51 through the seventh circuit 67.

Upon occurrence of a failure during operation, transmission of the control signal from the controller 10 to the first control valve 53, the second control valve 56 and the fail-safe valve 54 is stopped. As used herein, the term "failure" refers to a state in which the hydraulic pressure (s) of the first oil chamber 41 and/or the second oil chamber 42 cannot be controlled, and as a consequence the CVT 30 cannot be properly controlled. The "failure" corresponds to, for example, a failure of the controller 10, a failure of the first control valve 53, a failure of the second control valve 56, a break in a signal line through which the controller 10 and the first control valve 53 are connected to each other, and a break in a signal line through which the controller 10 and the second control valve 56 are connected to each other.

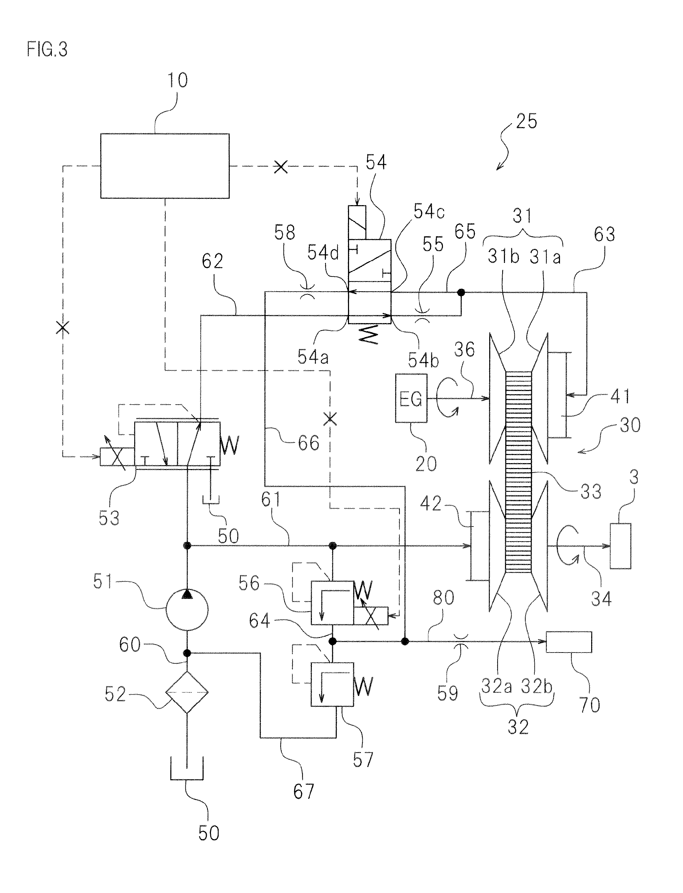

Upon stoppage of transmission of the control signal from the controller 10 to the fail-safe valve 54, the fail-safe valve 54 is switched to the state in which the first port 54a and the second port 54b communicate with each other and the third port 54c and the fourth port 54d communicate with each other as illustrated in FIG. 3. Upon stoppage of transmission of the control signal from the controller 10 to the first control valve 53 and the second control valve 56, the set pressure of the first control valve 53 (i.e., the hydraulic pressure of the second circuit 62, for example) becomes the maximum pressure, and the set pressure of the second control valve 56 (i.e., the hydraulic pressure of the first circuit 61, for example) becomes the maximum pressure. The set pressures of the first control valve 53 and the second control valve 56 are controlled to the maximum pressures at the time of failure in this manner in order to support the belt 33 by the primary pulley 31 and the secondary pulley 32 as firmly as possible by increasing the hydraulic pressures of the first oil chamber 41 and the second oil chamber 42, so that the belt 33 does not slide with respect to the primary pulley 31 and the secondary pulley 32.

Some of the oil discharged from the oil pump 51 is reduced in pressure through the first control valve 53, and then passes through the first port 54a and the second port 54b of the fail-safe valve 54 to flow into the third circuit 63. When the pressure of this oil is higher than the hydraulic pressure of the first oil chamber 41, this oil flows into the first oil chamber 41. For example, when the reduction ratio of the CVT 30 at the time of failure is small (e.g., in the case of "OD"), the hydraulic pressure of the first oil chamber 41 is low, and therefore, the oil passed through the first control valve 53 flows into the first oil chamber 41. As a result, the hydraulic pressure of the first oil chamber 41 increases. Note that a flow of the oil passed through the first port 54a and the second port 54b is reduced by the orifice 55, and therefore, an abrupt change in the pressure of the first oil chamber 41 is prevented. Consequently, an abrupt change in the reduction ratio is prevented.

The oil passed through the first port 54a and the second port 54b of the fail-safe valve 54 flows through the fifth circuit 65, passes through the third port 54c and the fourth port 54d of the fail-safe valve 54, and flows into the sixth circuit 66. Note that the sixth circuit 66 is provided with the orifice 58, thus preventing an excessive reduction in hydraulic pressure of a portion located upstream of the orifice 58, i.e., a component such as the first oil chamber 41. The hydraulic pressure of the first oil chamber 41 is maintained at a high level.

The oil of the sixth circuit 66 is supplied to the lubrication circuit 80. When the hydraulic pressure of the lubrication circuit 80 exceeds the upper limit due to the flow of the oil of the sixth circuit 66 into the lubrication circuit 80, some of this oil flows into the suction circuit 60 through the relief valve 57 and the seventh circuit 67. Accordingly, even when high-pressure oil flows into the lubrication circuit 80 through the sixth circuit 66, the hydraulic pressure of the lubrication circuit 80 will not be excessively increased. A smooth lubricating operation performed by the lubrication circuit 80 will not be hindered, and an excessive supply of oil to the sliding portion 70 will be prevented.

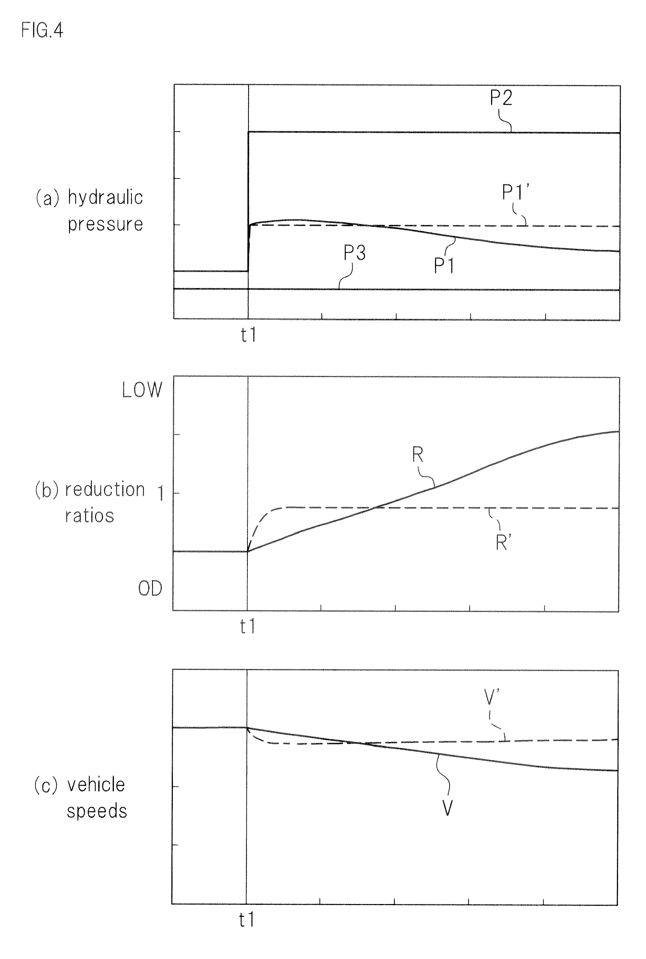

FIG. 4(a) is a time chart showing hydraulic pressure changes at the time of failure. In FIG. 4(a), the horizontal axis represents time, and t1 denotes a time at which a failure has occurred. The same goes for FIGS. 4(b) and 4(c). P1, P2 and P3 denote the hydraulic pressure of the first oil chamber 41, the hydraulic pressure of the second oil chamber 42, and the hydraulic pressure of the lubrication circuit 80, respectively. P1' denotes the hydraulic pressure of the first oil chamber 41 obtained in an example (hereinafter referred to as a "comparative example") where the fail-safe valve 54 and the sixth circuit 66 are omitted and the second circuit 62 and the third circuit 63 are connected in series. Upon an occurrence of failure at t1 and stoppage of transmission of the control signal from the controller 10 to the first control valve 53, the second control valve 56, and the fail-safe valve 54, the set pressure of the first control valve 53 becomes the maximum pressure, and thus both of P1 and P1' increase. In the comparative example, the hydraulic pressure of the first oil chamber 41 substantially corresponds to the maximum pressure of the first control valve 53, and therefore, P1' remains constant at the maximum pressure. In the present preferred embodiment, since the sixth circuit 66 is provided with the orifice 58, P1 is temporarily higher than P1' immediately after the occurrence of failure, but in the course of time, the oil of the first oil chamber 41 is discharged to the lubrication circuit 80 through the sixth circuit 66 resulting in a gradual reduction in P1. Note that the set pressure of the second control valve 56 also becomes the maximum pressure at the time of failure, and therefore, P2 increases concurrently with the occurrence of failure and then remains constant.

FIG. 4(b) is a time chart showing reduction ratios at the time of failure. R denotes a reduction ratio in the present preferred embodiment, and R' denotes a reduction ratio in the comparative example. As is evident from FIG. 4(b), R' abruptly changes but R moderately changes immediately after the occurrence of failure. It is also evident that upon lapse of a certain period of time after the occurrence of failure, R' does not change, but R continues to change and becomes higher than R' in the course of time. The reduction ratio R will be closer to "LOW" than the reduction ratio R'. Note that "OD" in FIG. 4(b) means "OVERDRIVE" and represents a state in which the reduction ratio is small.

FIG. 4(c) is a time chart showing vehicle speeds of the motorcycle 1 at the time of failure. V denotes a vehicle speed in the present preferred embodiment, and V' denotes a vehicle speed in the comparative example. As is evident from FIG. 4(c), V' abruptly changes but V moderately changes immediately after the occurrence of failure. After a lapse of a certain period of time since the occurrence of failure, V becomes lower than V'.

As described above, according to the present preferred embodiment, changes in the reduction ratio and vehicle speed at the time of failure can be moderated.

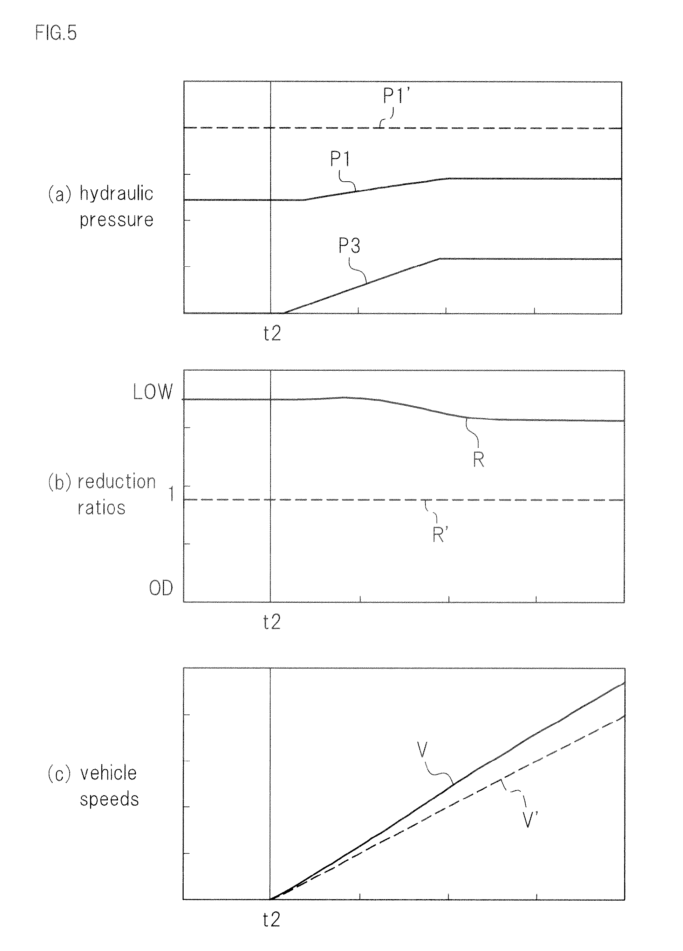

FIG. 5(a) is a time chart showing hydraulic pressure changes obtained when the motorcycle 1 temporarily stops after the occurrence of failure and then makes a start (hereinafter referred to as "restart"). In FIG. 5 (a), the horizontal axis represents time, and t2 denotes a time at which a restart is made. The same goes for FIGS. 5 (b) and 5 (c) . As is evident from FIG. 5 (a), P3 increases after the restart. This is because as the engine rotational speed increases, the rotational speed of the oil pump 51 increases, and the hydraulic pressure of the lubrication circuit 80 increases. No change is observed in P1', but in the present preferred embodiment, the first oil chamber 41 communicates with the lubrication circuit 80 via the sixth circuit 66, for example, and therefore, P1 increases as P3 increases. In this manner, P1 increases as the engine rotational speed increases.

FIG. 5 (b) is a time chart showing reduction ratios at the time of restart. As is evident from FIG. 5(b), R' does not change and remains constant, but R decreases. This is because as the engine rotational speed increases, the hydraulic pressure P1 of the first oil chamber 41 increases, and the movable sheave 31a of the primary pulley 31 comes close to the fixed sheave 31b thereof. In this manner, according to the present preferred embodiment, the vehicle restarts at the maximum reduction ratio and then the reduction ratio decreases during traveling.

FIG. 5(c) is a time chart showing vehicle speeds at the time of restart. As is evident from FIG. 5(c), the degree of increase in V is greater than the degree of increase in V' (i.e., an acceleration of V is greater than that of V'), and therefore, favorable acceleration characteristics can be achieved in the present preferred embodiment.

As described thus far, according to the present preferred embodiment, the vehicle can restart at a large reduction ratio, and in addition, the reduction ratio decreases after the restart, thus making it possible to achieve favorable acceleration characteristics.

According to the present preferred embodiment, the state of the fail-safe valve 54 is switched at the time of failure, and the first oil chamber 41 communicates with the lubrication circuit 80, i.e., the circuit whose hydraulic pressure changes in accordance with the engine rotational speed. Therefore, the hydraulic pressure of the first oil chamber 41 changes in accordance with the engine rotational speed. At the time of restart when the engine rotational speed is low, the hydraulic pressure of the first oil chamber 41 is relatively low, and the reduction ratio is relatively large. Accordingly, a smooth start is enabled. During traveling, the engine rotational speed is higher than that at the time of restart, and the hydraulic pressure of the first oil chamber 41 is relatively increased, resulting in a relatively small reduction ratio. Accordingly, smooth traveling is enabled. Thus, according to the present preferred embodiment, even at the time of failure, the reduction ratio changes to some extent in accordance with the traveling state of the motorcycle 1, thus making it possible to achieve both a smooth start and smooth traveling. According to the present preferred embodiment, the vehicle is able to "limp-home" more easily and reliably.

The hydraulic circuit 25 includes the oil pump 51 operated in conjunction with the engine 20. The lubrication circuit 80 is a circuit that communicates with the discharge-side portion of the oil pump 51 via the second control valve 56 functioning as the pressure reducing mechanism. The oil pump 51 and the second control valve 56 constitute a circuit whose hydraulic pressure changes in accordance with the engine rotational speed. According to the present preferred embodiment, the pressure change circuit whose hydraulic pressure changes in accordance with the engine rotational speed can be easily provided.

The lubrication circuit 80 is a circuit originally provided to supply oil to the sliding portion 70. According to the present preferred embodiment, the existing circuit can be used as the circuit whose hydraulic pressure changes in accordance with the engine rotational speed.

The third circuit 63 is provided with the orifice 55, and thus the orifice 55 reduces the flow of oil from the first control valve 53 toward the first oil chamber 41 at the time of failure. Therefore, the hydraulic pressure of the first oil chamber 41 is prevented from being abruptly changed at the time of failure. Accordingly, an abrupt change in the reduction ratio at the time of failure can be prevented.

The lubrication circuit 80 communicates with the suction circuit 60 via the seventh circuit 67, and the seventh circuit 67 is provided with the relief valve 57. Hence, even when the state of the fail-safe valve 54 is switched to cause a large amount of oil to flow into the lubrication circuit 80 at the time of failure, an excessive increase in hydraulic pressure of the lubrication circuit 80 is avoided. Accordingly, a smooth lubricating operation performed by the lubrication circuit 80 will not be hindered.

Since the sixth circuit 66 is provided with the orifice 58, the hydraulic pressure of the first oil chamber 41 is maintained at a high level when the state of the fail-safe valve 54 is switched to cause the first oil chamber 41 and the lubrication circuit 80 to communicate with each other at the time of failure. When oil is discharged from the first oil chamber 41, a change in hydraulic pressure of the first oil chamber 41 can be moderated.

### Second Preferred Embodiment

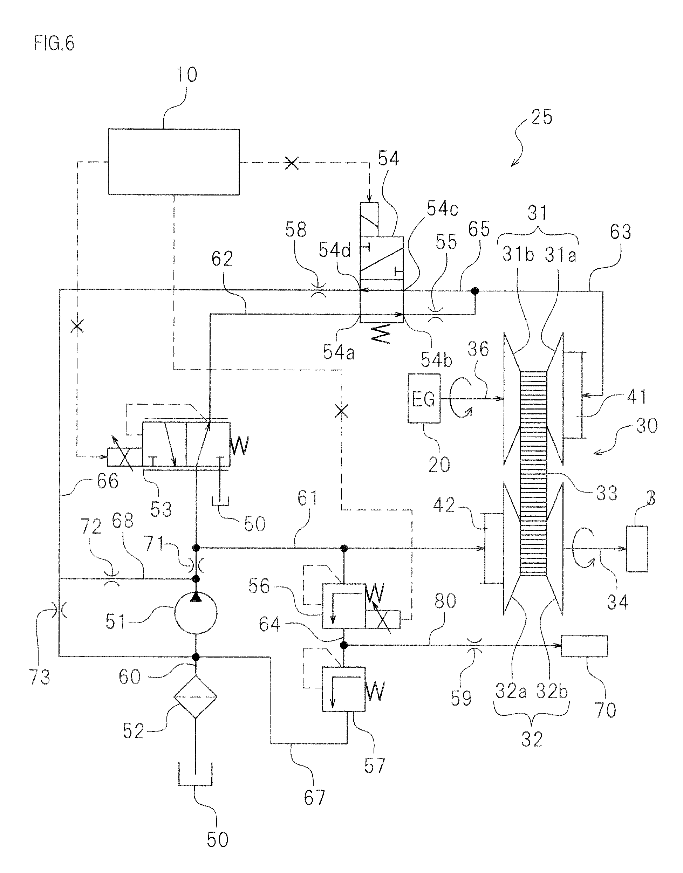

In the first preferred embodiment, the lubrication circuit 80 is utilized as the pressure change circuit whose hydraulic pressure changes in accordance with the engine rotational speed. As illustrated in FIG. 6, in the second preferred embodiment, a portion of the hydraulic circuit 25 according to the first preferred embodiment is modified, so that the pressure change circuit is provided separately from the lubrication circuit 80.

In the second preferred embodiment, a portion of the first circuit 61 located adjacent to the discharge-side portion of the oil pump 51 is provided with an orifice 71. A portion of the first circuit 61 located between the oil pump 51 and the orifice 71, and a portion of the suction circuit 60 located between the oil pump 51 and the strainer 52 communicate with each other via an eighth circuit 68. The eighth circuit 68 is provided with an orifice 72 and an orifice 73. A hydraulic pressure of a portion of the eighth circuit 68 located between the orifice 72 and the orifice 73 increases as the engine rotational speed increases, and decreases as the engine rotational speed decreases. In the present preferred embodiment, the portion of the eighth circuit 68 located between the orifice 72 and the orifice 73 is utilized as the pressure change circuit.

In the first preferred embodiment, the sixth circuit 66 connects the fourth port 54d of the fail-safe valve 54 and the lubrication circuit 80 to each other (see FIG. 2). In the present preferred embodiment, one end of the sixth circuit 66 is connected to the fourth port 54d of the fail-safe valve 54, and the other end of the sixth circuit 66 is connected to the portion of the eighth circuit 68 located between the orifice 72 and the orifice 73.

Other features of the second preferred embodiment are similar to those of the first preferred embodiment, and therefore, description thereof will be omitted.

Also in the second preferred embodiment, effects similar to those of the first preferred embodiment are obtained.

### Third Preferred Embodiment

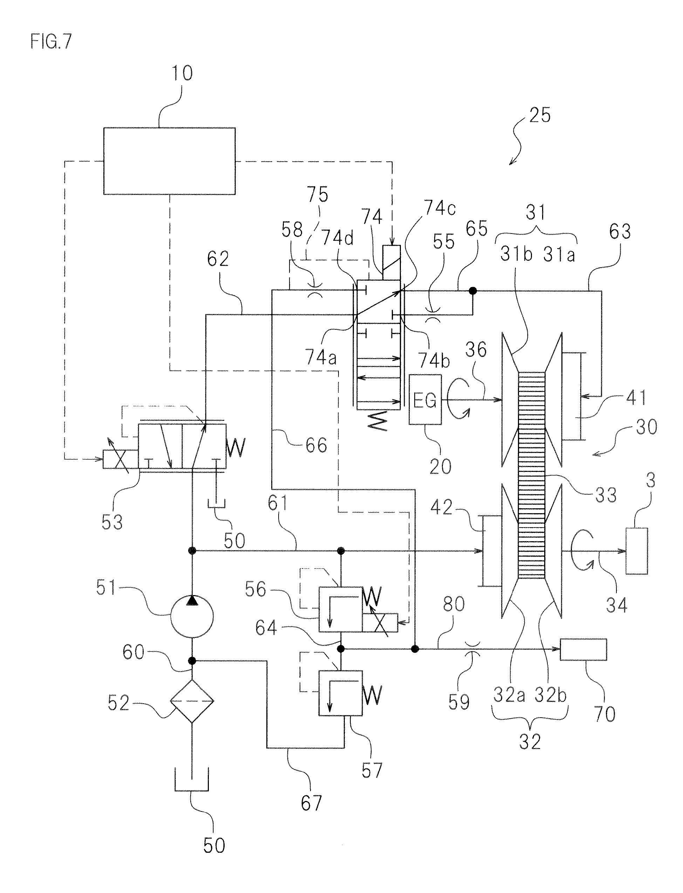

As illustrated in FIG. 7, in the third preferred embodiment , a portion of the hydraulic circuit 25 according to the first preferred embodiment is modified, so that the reduction ratio at the time of failure is more variable than that in the first preferred embodiment. In the third preferred embodiment, a fail-safe valve 74 is provided instead of the fail-safe valve 54.

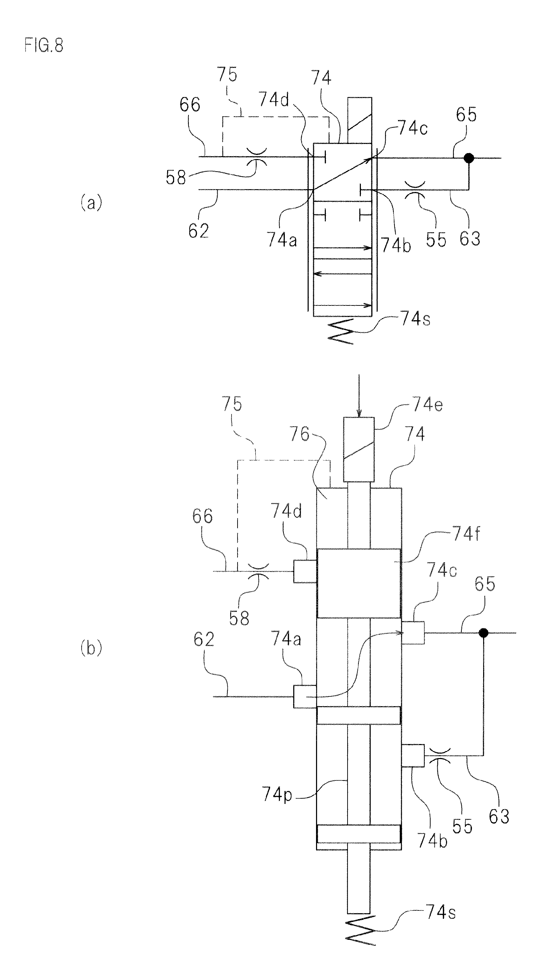

FIG. 8 (a) is a diagram including reference signs indicating the fail-safe valve 74, and FIG. 8(b) is a conceptual diagram illustrating a configuration of the fail-safe valve 74. As illustrated in FIG. 8(b), the fail-safe valve 74 is preferably an electromagnetic four-way valve, and includes a first port 74a, a second port 74b, a third port 74c and a fourth port 74d. The fail-safe valve 74 is controlled by the controller 10. The fail-safe valve 74 includes a solenoid 74e that generates a downward force upon reception of a control signal from the controller 10, and a spool 74p that is pushed downward by the solenoid 74e. The spool 74p is provided with a land 74f. Note that as used herein, "upward" and "downward" directions merely mean directions indicated in the drawings, and do not necessarily mean actual directions when the fail-safe valve 74 is installed. An oil chamber 76 is provided in the fail-safe valve 74, and the sixth circuit 66 and the oil chamber 76 communicate with each other via a communication passage 75.

As illustrated in FIG. 7 and FIG. 8(a), similarly to the fail-safe valve 54 according to the first preferred embodiment , the fail-safe valve 74 enters, during normal operation, a state (first state) in which the first port 74a and the third port 74c communicate with each other and the second port 74b and the fourth port 74d do not communicate with each other.

At the time of failure, transmission of the control signal from the controller 10 to the fail-safe valve 74 is stopped, and the fail-safe valve 74 enters a non-energized state. As a result, the solenoid 74e does not operate, and the force for pushing the spool 74p downward is lost, so that the spool 74p is urged upward by a spring 74s. Since the oil chamber 76 communicates with the sixth circuit 66 via the communication passage 75, the hydraulic pressure of the oil chamber 76 is equal to that of the sixth circuit 66. The hydraulic pressure of the oil chamber 76 acts on the land 74f, and the spool 74p receives the downward force due to the hydraulic pressure. The sixth circuit 66 communicates with the lubrication circuit 80, and the hydraulic pressure of the sixth circuit 66 changes in accordance with the engine rotational speed. Hence, the hydraulic pressure of the oil chamber 76 also changes in accordance with the engine rotational speed.

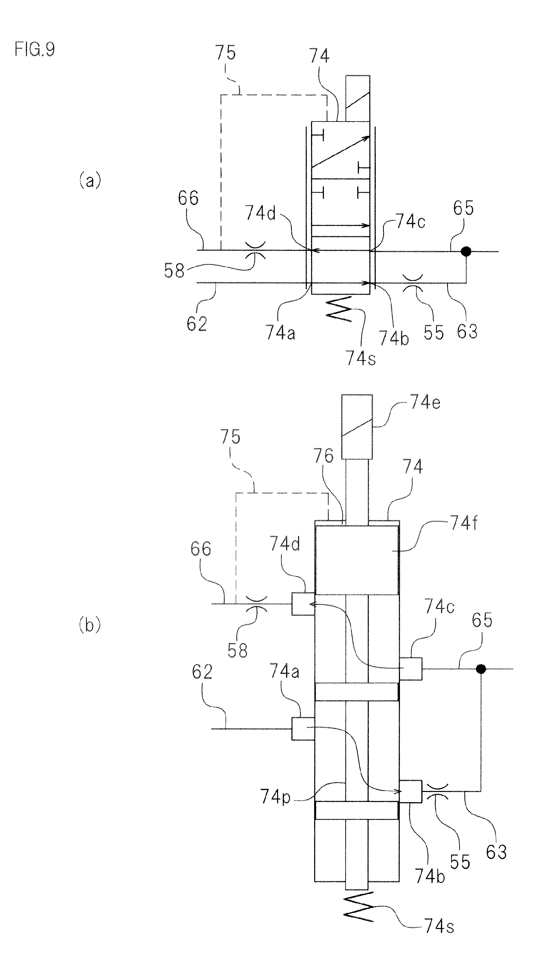

When the engine rotational speed is low, the hydraulic pressure of the oil chamber 76 is reduced. In this case, the force of the hydraulic pressure of the oil chamber 76 by which the spool 74p is pushed downward is smaller than the force of the spring 74s by which the spool 74p is pushed upward. As a result, as illustrated in FIG. 9 (b), the spool 74p is moved to an uppermost position. Then, as illustrated in FIGS. 9(a) and 9(b), the fail-safe valve 74 is switched to a state (second state) in which the first port 74a and the second port 74b communicate with each other and the third port 74c and the fourth port 74d communicate with each other.

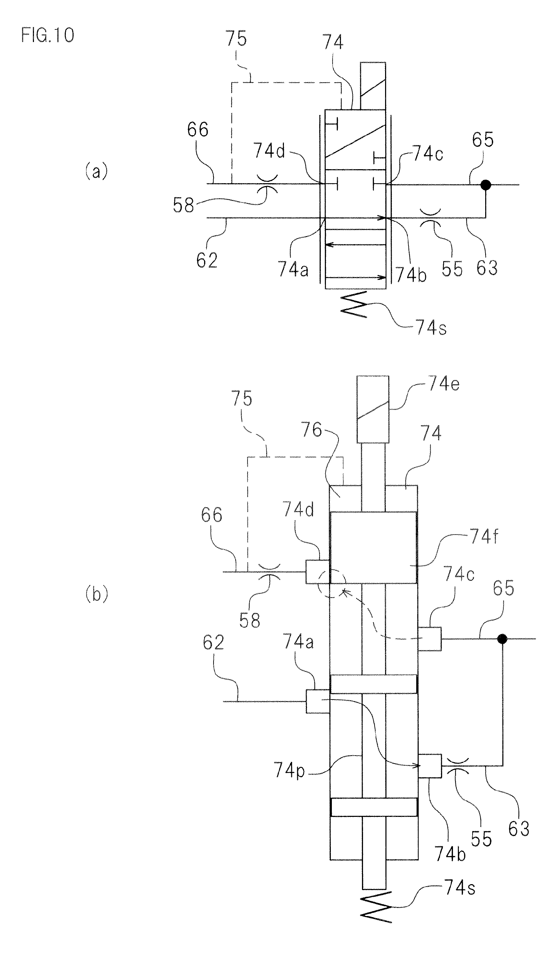

When the engine rotational speed is high, the hydraulic pressure of the oil chamber 76 is increased. In this case, the force of the hydraulic pressure of the oil chamber 76 by which the spool 74p is pushed downward is relatively increased, which moves the spool 74p downward against the urging force of the spring 74s as illustrated in FIG. 10 (b), for example. The land 74 f is also moved downward upon downward movement of the spool 74p. Then, the land 74f closes a portion of, or the entire, fourth port 74d. FIGS. 10(a) and 10(b) illustrate a state in which the entire fourth port 74d is closed. An opening area of the fourth port 74d depends on the position of the land 74f, so that the higher the position of the land 74f, the greater the opening area, and the lower the position of the land 74f, the smaller the opening area. Hence, the opening area of the fourth port 74d changes in accordance with the pressures of the sixth circuit 66 and the oil chamber 76.

When the engine rotational speed is relatively low, the hydraulic pressures of the sixth circuit 66 and the oil chamber 76 are reduced, and therefore, the opening area of the fourth port 74d is increased. When the opening area of the fourth port 74d is increased, the amount of oil discharged from the first oil chamber 41 through the third port 74c and the fourth port 74d is increased. Hence, the hydraulic pressure of the first oil chamber 41 is reduced, and the reduction ratio of the CVT 30 is increased.

When the engine rotational speed is relatively high, the hydraulic pressures of the sixth circuit 66 and the oil chamber 76 are increased, and therefore, the opening area of the fourth port 74d is reduced. When the opening area of the fourth port 74d is reduced, the amount of oil discharged from the first oil chamber 41 through the third port 74c and the fourth port 74d is reduced. Hence, the hydraulic pressure of the first oil chamber 41 is increased, and the reduction ratio of the CVT 30 is reduced.

According to the present preferred embodiment, the opening area of the fourth port 74d changes not only in accordance with a change in the hydraulic pressure of the lubrication circuit 80, but also in accordance with this change in hydraulic pressure, the hydraulic pressure of the first oil chamber 41 can be more variable. Accordingly, the reduction ratio can be more variable. According to the present preferred embodiment, when the engine rotational speed is increased, the reduction ratio can be further reduced, thus allowing the reduction ratio to assume a more suitable value for high speed traveling. Accordingly, the vehicle is able to "limp-home" even more easily and reliably.

### INDUSTRIAL APPLICABILITY

According to various preferred embodiments of the present invention, even when a reduction ratio of a CVT cannot be controlled due to a failure in a controller, for example, a vehicle is able to start and travel smoothly. Consequently, preferred embodiments of the present invention can provide a belt type continuously variable transmission that enables the vehicle to "limp-home" easily and reliably.

### REFERENCE SIGNS LIST

- 1: motorcycle (vehicle)
- 20: engine
- 25: hydraulic circuit
- 30: belt type continuously variable transmission (CVT)
- 31: primary pulley (first pulley)
- 32: secondary pulley (second pulley)
- 33: belt
- 41: first oil chamber
- 42: second oil chamber
- 51: oil pump
- 53: first control valve (control valve)
- 56: second control valve (pressure reducing mechanism)
- 54: fail-safe valve (switching valve)
- 80: lubrication circuit (pressure change circuit)

## Claims

1. A belt type continuously variable transmission to be installed on a vehicle including an engine, the belt type continuously variable transmission comprising:
a first pulley which includes a pair of first sheaves facing each other and a first oil chamber that contains oil and in which a distance between the pair of first sheaves is adjusted by a hydraulic pressure of the first oil chamber so that the distance between the pair of first sheaves decreases as the hydraulic pressure of the first oil chamber increases;
a second pulley including a pair of second sheaves facing each other;
a belt wound around the first pulley and the second pulley; and
a hydraulic circuit connected to the first oil chamber; wherein
the hydraulic circuit includes:
a control valve that controls the hydraulic pressure of the first oil chamber;
a pressure change circuit having a hydraulic pressure that changes in accordance with a rotational speed of the engine so that a higher rotational speed of the engine results in a higher hydraulic pressure in the pressure change circuit; and
a switching valve that is switched between a first state in which the control valve and the first oil chamber communicate with each other and a second state in which at least the first oil chamber and the pressure change circuit communicate with each other.

2. The belt type continuously variable transmission according to Claim 1, wherein the hydraulic circuit further includes an oil pump that operates in accordance with the rotational speed of the engine, and the pressure change circuit communicates with a discharge-side portion of the oil pump via a pressure reducing mechanism.

3. The belt type continuously variable transmission according to Claim 2, wherein the pressure change circuit opens to a sliding portion of the engine or a sliding portion of the belt type continuously variable transmission.

4. The belt type continuously variable transmission according to Claim 3, wherein the hydraulic circuit further includes:
another circuit through which the pressure change circuit and a suction-side portion of the oil pump communicate with each other; and
a relief valve provided in the another circuit and that opens when the hydraulic pressure of the pressure change circuit exceeds an upper limit.

5. The belt type continuously variable transmission according to Claim 1, wherein the hydraulic circuit further includes an orifice that reduces a flow of oil from the first oil chamber toward the pressure change circuit when the switching valve is set to the second state.

6. The belt type continuously variable transmission according to Claim 1, further comprising a controller programmed to transmit a control signal to each of the control valve and the switching valve; wherein
the control valve is arranged so as to control the hydraulic pressure of the first oil chamber within a pressure range between minimum and maximum pressures upon receipt of the control signal from the controller, and so as to control the hydraulic pressure of the first oil chamber to the maximum pressure when the control valve receives no control signal from the controller;
the first state is a state in which the control valve and the first oil chamber communicate with each other and the first oil chamber and the pressure change circuit do not communicate with each other;
the second state is a state in which the control valve and the first oil chamber communicate with each other and the first oil chamber and the pressure change circuit communicate with each other; and
the switching valve is arranged so that the switching valve is set to the first state upon receipt of the control signal from the controller, and is set to the second state when the switching valve receives no control signal from the controller.

7. The belt type continuously variable transmission according to Claim 6, wherein the hydraulic circuit further includes an orifice that reduces a flow of oil from the control valve toward the first oil chamber when the switching valve is set to the second state.

8. The belt type continuously variable transmission according to claim 1, wherein an area of a flow passage of the switching valve changes in accordance with a magnitude of the hydraulic pressure of the pressure change circuit so that a higher hydraulic pressure of the pressure change circuit results in a smaller area of the flow passage from the first oil chamber toward the pressure change circuit.

9. The belt type continuously variable transmission according to Claim 1, wherein
the second pulley includes a second oil chamber that contains oil;
the pressure change circuit opens to a sliding portion of the engine or a sliding portion of the belt type continuously variable transmission;
the switching valve is an electromagnetic four-way valve including first, second, third and fourth ports;
the hydraulic circuit further includes:
an oil pump that operates in accordance with the rotational speed of the engine;
a first circuit through which a discharge-side portion of the oil pump and the second oil chamber communicate with each other;
a second circuit through which the first circuit and the first port of the four-way valve communicate with each other, the second circuit including with the control valve;
a third circuit through which the second port of the four-wayvalve and the first oil chamber communicate with each other, the third circuit including an orifice;
a fourth circuit through which the first circuit and the pressure change circuit communicate with each other, the fourth circuit including another control valve that controls a hydraulic pressure of the second oil chamber;
a fifth circuit through which a portion of the third circuit, located closer to the first oil chamber than the orifice, and the third port of the four-way valve communicate with each other; and
a sixth circuit through which the fourth port of the four-way valve and the pressure change circuit communicate with each other, the sixth circuit including an orifice; and
the four-way valve is arranged so that the first port and the third port communicate with each other and the second port and the fourth port do not communicate with each other when the four-way valve is energized, and so that the first port and the second port communicate with each other and the third port and the fourth port communicate with each other when the four-way valve is not energized.

10. A vehicle comprising the belt type continuously variable transmission according to any one of Claims 1 to 9.
